# EUROPÄISCHE PATENTANMELDUNG

(11) **EP 1 681 187 A2**
(43) Veröffentlichungstag der Anmeldung: **19.07.2006**
(21) Anmeldenummer: 06000373.8
(22) Anmeldetag: 10.01.2006
(51) Int. Cl.: B60G 17/02, B60G 15/06, F16F 15/02

(54) **Aktuator für einen verstellbaren Federträger**

(30) Priorität: 14.01.2005 DE 102005001746
(71) Anmelder: ZF FRIEDRICHSHAFEN AG, 88046 Friedrichshafen (DE)
(72) Erfinder: Ketteler, Hermann, 88677 Markdorf (DE); Kett, Jürgen, 88045 Friedrichshafen (DE); Muschel, Allan, 88046 Friedrichshafen (DE); Füssl, Andreas, 88079 Kressbronn (DE); Schön, Wolfgang, 88085 Langenargen (DE)

(57) **Zusammenfassung**

Federträger, umfassend eine erste Baugruppe, an der sich ein Aktuator abstützt, wobei der Aktuator als ein permanent erregter Synchronmotor ausgeführt ist, bei dem mittels einer Sensorik die Lage eines Rotors zum Stator erfasst wird und über den ein erster Federteller axial einstellbar ist, mit einer zweiten Baugruppe, die mit einen zweiten Federteller in Wirkverbindung steht, wobei zwischen den beiden Federtellern eine Feder angeordnet ist, wobei der Sensor als ein Scheibensensor ausgeführt, dessen Eingangsteil am Rotor und dessen Ausgangsteil statorseitig befestigt ist.

## Beschreibung

Die Erfindung betrifft einen Aktuator für einen verstellbaren Federträger gemäß dem Oberbegriff von Patentanspruch 1.

Die DE 101 01 694 C1 beschreibt einen Federträger, der eine Tragfeder zwischen zwei Federtellern aufweist. Einer der Federteller lässt sich über einen elektromotorischen Aktuator in seiner axialen Position einstellen. Der E-Motor kann als ein permanent erregter Synchronmotor ausgeführt sein, dessen Rotor mit Permanentmagneten bestückt ist.

Zur Steuerung eines permanent erregten Synchronmotors benötigt man ein Lagesignal des Rotors zum Stator. Eine Möglichkeit zur Erzeugung eines Lagesignals besteht in der Verwendung eines Lagesensors. In "Gleichstrom-Kleinmotoren", Band 189, Verlag Moderne Industrie, Seiten 35 - 36, wird darauf hingewiesen, dass verschiedene Möglichkeiten zur Positionssensorik bekannt sind. Zum einen kann man Positionssensoren z. B. in der Bauform von Hallsensoren verwenden. Es besteht aber auch die Möglichkeit, dass man einen E-Motor mittels elektronischer Schaltungen ohne Sensoren betreiben kann.

Bei einem Federträger liegen in der Regel sehr beengte Bauräume vor. Neben der Verdrahtung der Spulen des Stators ist noch die Verdrahtung des Sensors zur Positionsmessung zu berücksichtigen. Des weiteren sollte der Sensor eine Mindestgröße aufweisen, um ein möglichst exaktes Positionssignal zu erhalten.

Die Aufgabe der vorliegenden Erfindung besteht darin, einen platzsparenden E-Motor als Aktuator für einen Federträger zu realisieren.

Erfindungsgemäß wird die Aufgabe dadurch gelöst, dass der Sensor als ein Scheibensensor ausgeführt, dessen Eingangsteil am Rotor und dessen Ausgangsteil statorseitig befestigt ist.

Der Scheibensensor benötigt nur sehr wenig axialen Bauraum. Es werden dafür sehr dünne Platinen eingesetzt. Statorseitig bedeutet nicht, dass das Ausgangsteil direkt mit dem Stator verbunden sein muss, sondern nur ortsfest zum Stator angeordnet ist.

In weiterer vorteilhafter Ausgestaltung ist der Scheibensensor an dem in Richtung des verstellbaren Federtellers weisenden Ende des Aktuators befestigt. Dieser Anbringungsort des Sensor vereinfacht es, den Stator in ein Statorgehäuse einzuführen und ein Ausgangsteil des Sensors zu befestigen. Innerhalb des ringförmigen Stators kann dann der Rotor eingeführt werden, dessen eingangsseitiger Sensor anschließend gut montierbar ist.

Damit ein möglichst gutes Sensorsignal vorliegt, soll ein großflächiger Sensor eingsetzt werden. Dazu weist der Rotor ein nach radial außen weisendes Winkelteil auf, an dem das Eingangsteil des Scheibensensors befestigt ist.

Zum Schutz der Scheibensensors gegen Anschlagen bei einer Endstellung des verstellbaren Federteller wird der Scheibensensor von einer ausgangsseitigen Prallscheibe geschützt.

Zur Vereinfachung der Verdrahtung des gesamten E-Motors sind der Stator in Richtung eines Anschlusslagers und der Scheibensensor nach radial außen verkabelt. Damit verläuft die Verkabelung vollständig außerhalb des Rotors.

Gemäß einem vorteilhaften Unteranspruch sind Permanentmagnete auf dem Rotor aufgeklebt. Der radiale Bauraumbedarf für den Aktuator wird günstig gehalten. Des weiteren kann man auf die in der Regel verwendeten Rotorblechpakete verzichten und einen rohrförmigen Rotorgrundträger verwenden.

Damit eine insgesamt sehr stabile Baueinheit vorliegt, die auch größe Krafteinleitungen über den E-Motor aufnehmen kann, verfügt ein den Stator aufnehmendes Gehäuse über einen Hülsenabschnitt und einen in Richtung eines Anschlusslagers weisenden Boden, wobei der Boden und der Hülsenabschnitt einteilig ausgeführt sind. An dem Boden können Befestigungsmittel ansetzen, die den Aktuator mit einem Anschlusslager des gesamten Federträgers verbinden.

Anhand der folgenden Figurenbeschreibung soll die Erfindung näher erläutert werden.

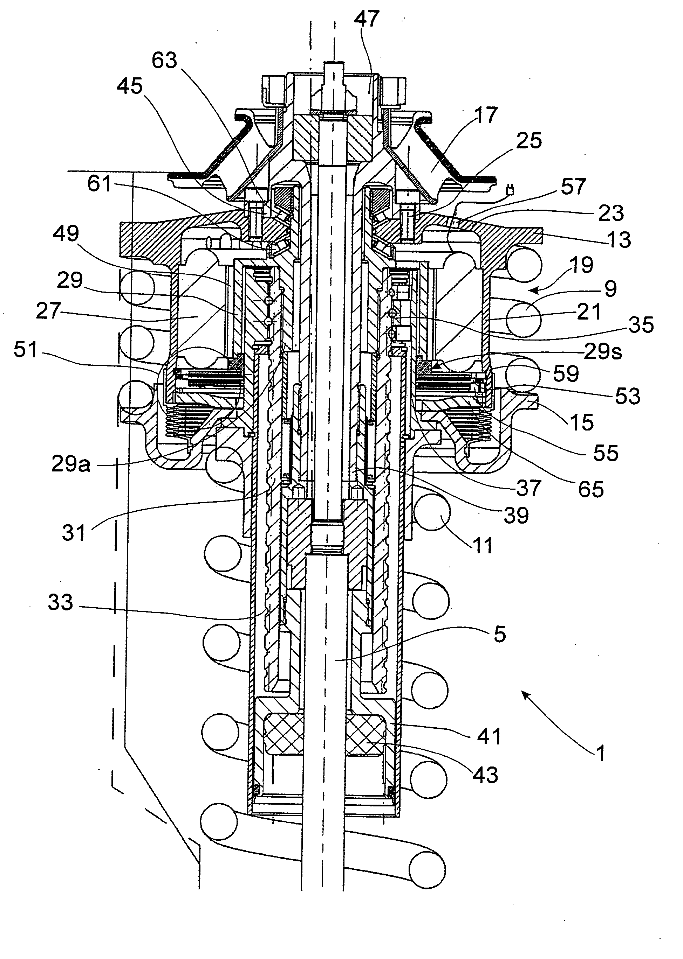

Die einzige Figur zeigt einen oberen Abschnitt eines Federträgers 1, der beispielsweise zwischen einer nichtdargestellten Fahrzeugachse und einem Fahrzeugaufbau angeordnet ist. Ein an sich bekannter Schwingungsdämpfer 3, der eine axial bewegliche Kolbenstange 5 in einem Zylinder 7 umfasst, wird von einer ersten und einer zweiten Feder 9; 11 eingehüllt. Die erste Feder 9 ist zwischen einem ersten Federteller 13 und einem zweiten Federteller 15 verspannt. Die zweite Feder 11 liegt an der Unterseite des zweiten Federtellers 15 und einem nicht dargestellten dritten Federteller an, der optional an dem Zylinder 7 oder einem Achsteil der Fahrzeugachse befestigt ist. Der obere Federteller 13 ist über ein kardanisch bewegliches Anschlusslager 17 mit dem Fahrzeugaufbau verbunden. Das kardanische Lager stellt eine erste Baugruppe dar. Eine zweite Baugruppe wird von dem dritten Federteller gebildet. wobei sich die beiden Baugruppen axial zueinander bewegen können. An diesem Anschlusslager ist ebenfalls ein Aktuator 19 in der Bauform eines E-Motors angeschlossen. Der Aktuator umfasst ein Gehäuse mit einem Hülsenabschnitt 21 mit einem in Richtung des Anschlusslagers 17 weisenden Boden 23, der Befestigungsmittel 25 zum Anschlusslager aufweist, wobei der obere Federteller 13, der Boden 23 und der Hülsenabschnitt 21 einteilig ausgeführt ist.

In dem Gehäuse 21 ist ein ringförmiger Stator 27 angeordnet, der einen Rotor 29 mit einem u-förmigen Querschnitt antreibt. Auf einem axial verlaufenden Schenkel 29a des Rotors 29 ist eine Gewindespindel 31 befestigt, die auf ihrer äußeren Mantelfläche ein Bewegungsgewinde 33 aufweist. In das Bewegungsgewinde 33 greift eine Gewindemutter 35 ein, die über eine Zwischenhülse 37 mit dem zweiten Federteller 15 in Wirkverbindung steht. In Abhängigkeit der Drehbewegung des Rotors und damit der Gewindespindel führt die Gewindemutter eine translatorische axiale Bewegung aus, die von dem zweiten Federteller 15 synchron mit ausgeführt wird, wodurch sich die Gesamttragkraft der beiden Federn 9; 11 einstellen lässt, um z. B. eine Wankbewegung des Fahrzeugaufbaus zu kompensieren.

Ausgehend vom Anschlusslager 17 erstreckt sich innerhalb der Gewindespindel ein Führungsrohr 39, das an seinem unteren Ende eine Glocke 41 trägt, in der ein Anschlagpuffer 43 eingespannt ist, der ab einer definierten Hublage des Schwingungsdämpfers 3 auf einer oberen Stirnfläche des Zylinders 7 zur Anlage kommt. Das Führungsrohr ist in Axialrichtung und in Umfangsrichtung ortsfest zum Anschlusslager gelagert, wobei ein Flansch 45 von den Befestigungsmitteln 25 zum Gehäuse des E-Motors durchdrungen wird. In einer topfförmigen Erweiterung 47 ist die Kolbenstange befestigt.

Bei dem E-Motor handelt es sich um einen permanent erregten Synchronmotor, auf dessen Rotor 29 Permanentmagnete 49 aufgeklebt sind. Zur Steuerung des E-Motors dient ein Sensor, der als ein Scheibensensor 51 ausgeführt ist. Ein Eingangsteil 53 des Scheibensensors ist verdrehfest mit dem Rotor 29 und ein Ausgangsteil 55 mit seinem Außendurchmesser statorseitig, in diesem Fall am Hülsenabschnitt 21 des Gehäuses, befestigt. Der Rotor weist ein nach radial außen weisendes Winkelteil 29s auf, an dem das Eingangsteil des Sensors befestigt ist. Man kann das Winkelteil und den Rotor auch einteilig herstellen. Damit liegt für den Scheibensensor eine vergleichsweise große Kreisringfläche vor, mit der man ein sehr gutes Signal zur Steuerung des E-Motors erzeugen kann. Das Eingangs- und das Ausgangsteil werden dabei von sehr dünnen Platinen gebildet. Wie aus der Zeichnung ersichtlich ist, ist der Sensor 51 an dem in Richtung des verstellbaren Federtellers 15 weisenden Ende des Rotors 29 befestigt. Folglich kann der Stator in Richtung des Anschlusslagers 17 verkabelt werden. Dafür verfügt der Boden 23 über entsprechende Durchlässe 57. Die elektrischen Anschlüsse für den Sensor 51 verlaufen nach radial außen und können über eine Durchgangsöffnung 59 verlegt werden.

Bei der Montage wird der Stator 27 in das Gehäuse eingeschoben und darin befestigt. Die Verkabelung führt man dabei durch die Durchlässe 57 nach oben in Richtung Anschlusslager 17. Danach wird der Rotor 29 in den Stator eingeführt und über Lager 61; 63 ober- und unterhalb des Bodens 23 gehalten. In einem nächsten Schritt wird von dem Sensor 51 das Eingangsteil 53 am Rotor befestigt, wobei man das Eingangsteil auch in einem vorgeschalteten Schritt am Rotor montieren kann. Danach wird das Ausgangsteil 55 am Hülsenabschnitt 21 ortsfest zum Stator fixiert. Abschließend setzt man eine statorseitige Prallscheibe 65 in den Gehäuseabschnitt 21 ein, die in einer Endstellung des verstellbaren Federtellers 15 einen mechanischen Schutz für den Scheibensensor bietet.

Insgesamt liegt ein sehr kompakt bauender Aktuator vor, insbesondere durch die getrennte Verkabelung von Scheibensensor und Stator.

## Patentansprüche

1. Federträger, umfassend eine erste Baugruppe, an der sich ein Aktuator abstützt, welcher als ein permanent erregter Synchronmotor ausgeführt ist, bei dem mittels einer Sensorik die Lage eines Rotors zu einem Stator erfasst wird und über den ein erster Federteller axial einstellbar ist, und eine zweite Baugruppe, die mit einen zweitem Federteller in Wirkverbindung steht, wobei zwischen den beiden Federtellern eine Feder angeordnet ist,
**dadurch gekennzeichnet,**
**dass** der Sensor als ein Scheibensensor (51) ausgeführt, dessen Eingangsteil (53) am Rotor (29) und dessen Ausgangsteil (55) statorseitig befestigt ist.

2. Federträger nach Anspruch 1,
**dadurch gekennzeichnet,**
**dass** der Scheibensensor (51) an dem in Richtung des verstellbaren Federtellers (15) weisenden Ende des Aktuators (27; 29) befestigt ist.

3. Federträger nach Anspruch 1,
**dadurch gekennzeichnet,**
**dass** der Rotor (29) ein nach radial außen weisendes Winkelteil (29s) aufweist, an dem das Eingangsteil (53) des Scheibensensors (51) befestigt ist.

4. Federträger nach Anspruch 2,
**dadurch gekennzeichnet,**
**dass** der Scheibensensor (51) von einer ausgangsseitigen Prallscheibe (65) gegen den verstellbaren Federteller (15) geschützt sind.

5. Federträger nach Anspruch 2;
**dadurch gekennzeichnet,**
**dass** der Stator (27) in Richtung eines Anschlusslagers (17) und der Scheibensensor (51) nach radial außen verkabelt ist.

6. Federträger nach Anspruch,
**dadurch gekennzeichnet,**
**dass** Permanentmagnete (49) auf dem Rotor (29) aufgeklebt sind.

7. Federträger nach Anspruch 1,
**dadurch gekennzeichnet,**
**dass** ein den Stator (27) aufnehmendes Gehäuse einen Hülsenabschnitt (21) und über einen in Richtung eines Anschlusslagers (17) weisenden Boden (23) verfügt, wobei der Boden (23) und der Hülsenabschnitt (21) einteilig ausgeführt sind.
